# EUROPEAN PATENT APPLICATION

(11) **EP 4 361 740 A1**
(43) Date of publication of application: **01.05.2024**
(21) Application number: 22204540.3
(22) Date of filing: 28.10.2022
(51) Int. Cl.: G05B 13/02, G05B 15/02

(54) **A COMPUTER-IMPLEMENTED METHOD FOR CONFIGURING A CONTROLLER FOR A TECHNICAL SYSTEM**

(71) Applicant: Siemens Schweiz AG, 8047 Zürich (CH)
(72) Inventor: MADERSPACHER, Johannes, 82467 Garmisch-Partenkirchen (DE); SCHÖNER, Holger, 81739 München (DE); BAUMANN, Paul, 8038 Zürich (AT); TEWARI, Ujwal Padam, 560100 Bangalore (IN)
(74) Representative: Siemens Patent Attorneys

(57) **Abstract**

The invention refers to a computer-implemented method for configuring a controller (CO) for a technical system, where the controller (CO) controls the technical system based on an output data set (OS) determined by the controller (CO) for an input data set (IS), wherein the method comprises the following steps:
- training a first data driven model (SM) with training data comprising several pre-known input data sets (IS) and corresponding pre-known output data sets (OS) for the respective pre-known input data sets (IS), where the first data driven model (SM) predicts respective future values of one or more target variables (tv) for one or more subsequent time points (tp) after a current time point;
- training a second data driven model (PO) with said training data using reinforcement learning with a reward (RW) depending on the respective future values of said one or more target variables (tv) which are predicted by the trained first data driven model (SM), where the trained second data driven model (PO) is configured to determine the output data set (OS) for the input data set (IS) within the controller (CO).

## Description

The invention refers to a computer-implemented method for configuring a controller for a technical system, a corresponding controller as well as a computer program product and a computer program.

In order to enable an optimized operation of a technical system, there is the need to provide an adequate control of the technical system based on an optimization problem which often has conflicting goals.

In the technical field of building management systems, cooling and heating of rooms within a building can consume higher mounts of energy. The corresponding controller for the rooms shall at one hand minimize the energy consumption and on the other hand maintain comfortable conditions for the occupants inside the room.

The conditions of a building depend on a great number of parameters. Those parameters include the general behavior of the building, involving dimensions of rooms, materials used within the building, place and orientation of the building, available heating, cooling and ventilation systems, and the like. Furthermore, the parameters comprise time-varying conditions, such as the outside weather, the room occupancy, and the like. Due to this large amount of data, an optimized control of a building management system is a highly non-trivial problem.

In the field of building management and also in other technical applications, so-called MPC approaches (MPC = model predictive control) are used for controlling a technical system. Concerning building management systems, those approaches use simplified models of the building, e.g. thermal resistance capacity models, in order to predict adequate values of control variables for the building management system. With the help of these models, future room conditions given certain control settings are predicted, thus allowing an optimization over the available control settings.

The models of the building used in MPC approaches do not consider all information relevant for controlling the building. Furthermore, a high modelling effort is required to achieve a good prediction of control variables and a good optimization performance. Furthermore, the models used in MPC approaches still need to be calibrated to the actual building to be controlled.

It is an object of the invention to improve the control of a technical system.

This object is achieved by the method according to claim 1, the controller according to claim 12, the computer program product according to claim 13 and the computer program according to claim 14.

The computer-implemented method according to the invention is used for configuring a controller for a technical system. The term technical system is to be interpreted broadly and can refer to any technical system in different technical application areas. In a preferred embodiment, the technical system is a building management system for a building. The controller controls the technical system based on an output data set determined by the controller for an input data set. In other words, the controller performs control actions being described by the output data set.

The output data set comprises respective future values of one or more control variables for one or more subsequent time points not before a current time point and preferably including the current time point. Here and in the following, the term "one or more subsequent time points" preferably refers to several subsequent time points.

The input data set comprises respective past values of one or more state variables for one or more subsequent time points not after the current time point and preferably including the current time point and respective past values of one or more target variables for one or more subsequent time points not after the current time point and preferably including the current time point and respective past values of said one or more control variables for one or more subsequent time points before the current time point.

All the above variables, i.e. the state variables, the target variables and the control variables, are variables which have an influence on the behavior of the technical system where the control variables are the variables adjusted by the controller. Preferably, the state variables and the target variables at least partially comprise observations which are captured by sensors of the technical system. The target variables differ from the state variables in that the target variables are optimized by the controller by being implemented in a reward as will be described below.

The method according to the invention comprises two steps which will be described in the following. In a first step, a first data driven model is trained with training data comprising several pre-known input data sets and corresponding pre-known output data sets for the respective pre-known input data sets. Those pre-known input and output data sets have the structure as defined above. The first data driven model predicts respective future values of said one or more target variables for one or more subsequent time points after the current time point. To do so, the first data driven model receives as input a corresponding input data set as well as future values of said one or more control variables at one or more subsequent time points not before the current time point and preferably including the current time point.

After having trained the first data driven model, the second data driven model is trained in a second step with said training data using (offline) reinforcement learning with a reward taking on the form of supervised learning where the reward is the cost function which has to be maximized. The reward depends on the respective future values of said one or more target variables which are predicted by the first data driven model having been trained as described above. For this prediction, the first (trained) data driven model receives as input an input data set also used as input data set for the second data driven model as well as future values of said one or more control variables at one or more subsequent time points not before the current time point and preferably including the current time point, the future values being predicted by the second data driven model. The second data driven model trained by the above step is configured to determine the output data set based on the input data set within the controller.

The above-mentioned respective future or past values of corresponding variables (state variables, control variables, target variables) may only refer to a single value in case that there is only one variable and that the one or more subsequent time points just comprise a single time point.

The method according to the invention provides a very efficient data driven approach for configuring a controller for a technical system. Particularly, a control strategy can be implemented by a corresponding reward, where the reward depends on target variables which shall be optimized and are predicted by the first data driven model. The control itself is performed by the second data driven model being trained by (offline) reinforcement learning (supervised training) using the above reward.

In a preferred embodiment of the invention, the input data set further includes future values of at least one predetermined state variable out of said one or more state variables for one or more subsequent time points after the current time point. According to this embodiment, the state variables include at least one (predetermined) state variable which is provided by an adequate (external) prediction of forecast. Such state variables may e.g. refer to forecasted weather data relevant for the technical system.

In another preferred embodiment of the invention, the input data set includes one or more variables, each variable indicating a corresponding goal of optimization in the reward. This embodiment enables an appropriate adjustment of the reward and allows to balance competing optimization goals.

In case that the technical system is a building management system, the one or more state variables preferably comprise at least one of the following variables:
- the occupancy of at least one room in the building, i.e. the number of persons in the at least one room;
- the solar radiation from outside the building;
- one or more ambient variables around the building, particularly the ambient temperature around the building or any other ambient conditions.

In case that the technical system is a building management system, the one or more target variables preferably comprise at least one of the following variables:
- one or more variables within at least one room in the building, particularly the room temperature or other conditions within the room, e.g. the room level humidity or the CO₂ concentration in the room;
- the cooling power for cooling at least one room in the building;
- the heating power for heating at least one room in the building.

In case that the technical system is a building management system, the one or more control variables preferably comprise at least one of the following variables:
- a cooling setpoint indicating the maximum room temperature allowed for at least one room in the building;
- a heating setpoint indicating the minimum temperature allowed for at least one room in the building.

The cooling setpoint as defined above refers to a room temperature at which a cooling shall begin in order to stay below this room temperature. The heating setpoint as defined above refers to a room temperature at which a heating shall begin in order to stay above this room temperature.

In a particularly preferred embodiment, the reward is a balance between a low energy consumption and a comfortable room temperature. To do so, the reward is defined such that the reward is higher for predicted values of the room temperature lying between a predicted future value of the heating setpoint and a predicted future value of the cooling setpoint (at the same future time point) than for other values of room temperatures and that the reward raises with a decreasing predicted value of the cooling power and a decreasing predicted value of the heating power.

In another preferred embodiment of the invention, the first data driven model is a probabilistic model providing predicted future values of said one or more target variables together with an uncertainty and the second data driven model incorporates said one or more uncertainties as one or more corresponding penalization terms in the reward. Preferably, the uncertainty refers to a standard deviation of a probability distribution where the predicted future values of the one or more target variables refer to the mean of the probabilistic distribution. The probabilistic distribution is preferably a Gaussian distribution. Probabilistic data driven models are well-known in the prior art and, thus, will not be described in detail.

In a particularly preferred embodiment, the first data driven model is a neural network. This neural network preferably comprises one or more layers of well-known LSTM calls (LSTM = long short-term memory) and/or one or more layers with several well-known multi layer perceptrons. Such a neural network provides good predictions for future values of corresponding target variables. Preferably, the LSTM cells have shared weights (i.e. the same weights for each cell) and/or the multi layer perceptrons have shared weights (i.e. the same weights for each perceptron). In an alternative embodiment, the neural network may comprise convolutional neural network layers instead of layers of LSTM cells.

In another preferred embodiment, the second data driven model is also a neural network. Preferably, this neural network comprises a multi layer perceptron and preferably a single multi layer perceptron.

Besides the above method, the invention refers to a controller for a technical system, wherein the controller is adapted to carry out a method according to the invention or according to one or more preferred embodiments thereof.

Furthermore, the invention refers to a computer program product with program code stored on a machine-readable carrier for carrying out the method according to the invention or according to one or more preferred embodiments thereof when the program code is executed on a computer.

Furthermore, the invention refers to a computer program with program code for carrying out the method according to the invention or according to one or more preferred embodiments thereof when the program code is executed on a computer.

In the following, an embodiment of the invention will be described in detail with respect to the accompanying drawings, wherein:
- Fig. 1: is a schematic diagram illustrating the training of the first data driven model according to an embodiment of the invention;
- Fig. 2: is a schematic diagram illustrating the training of the second data driven model according to an embodiment of the invention; and
- Fig. 3: is a schematic diagram illustrating the operation of a controller being configured by the training as shown in Fig. 1 and Fig. 2.

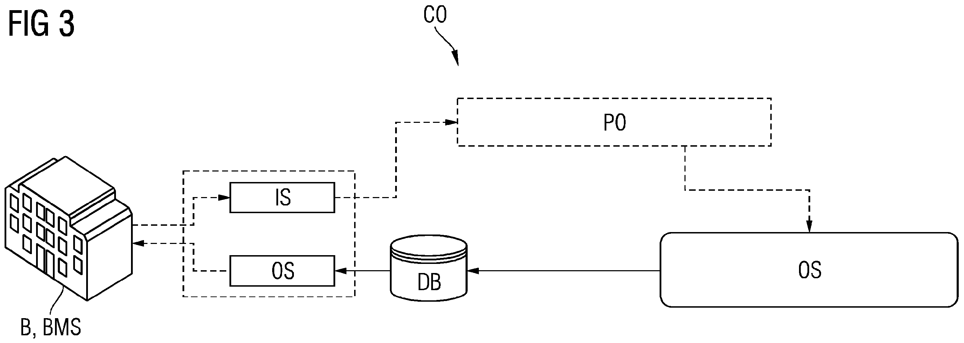

In the following, an embodiment of the invention will be described with respect to a controller CO of a technical system in the form of a building management system BMS for a building B (see Fig. 3). It is the aim of the controller to set a comfortable temperature of the rooms within the building without consuming much energy. In the following, the adjustment of the temperature for one room in the building being performed by the controller CO will be described. However, the controller can be used to adjust the temperature in all rooms within the building.

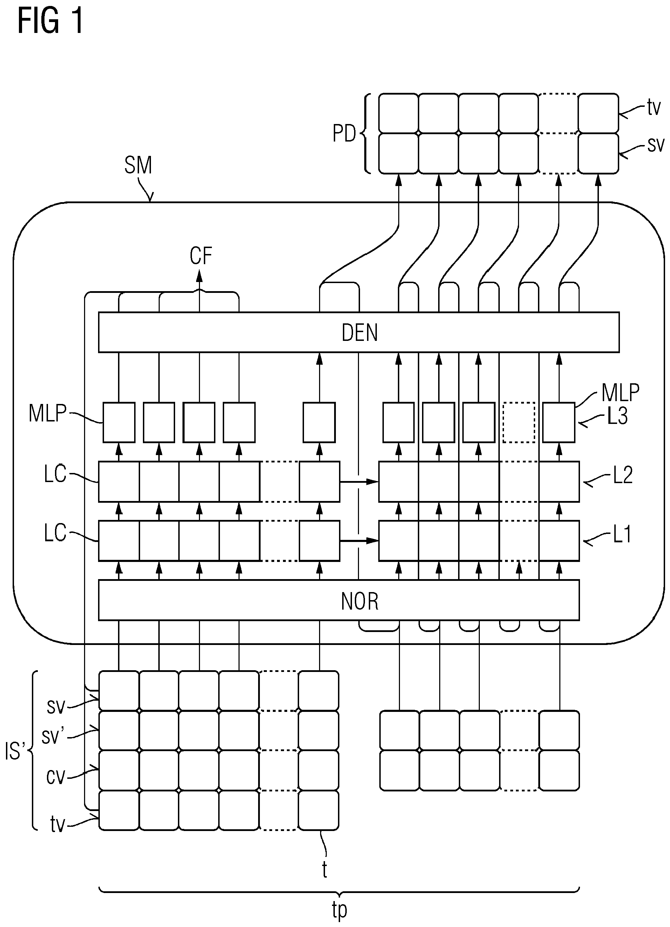

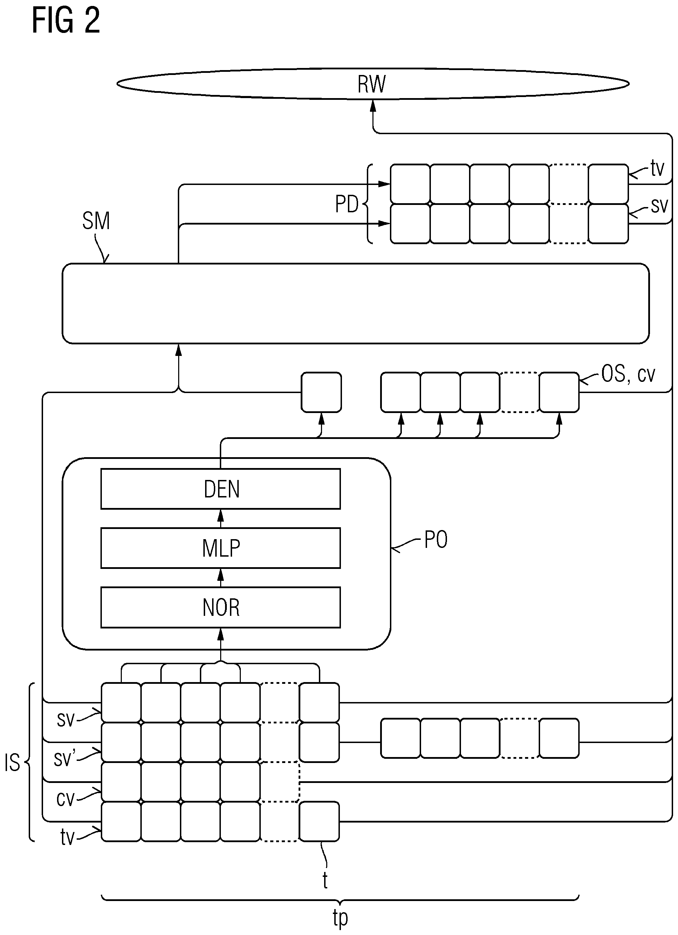

With respect to Fig. 1 and Fig. 2, the configuration of the controller CO based on the training of data driven models will be described. Two data driven models are used to configure the controller CO, namely a surrogate model being a first data driven model in the sense of claim 1 and a policy model PO being a second data driven model in the sense of claim 1. For configuring the controller CO, the surrogate model is trained at first. This training is shown in Fig. 1.

In Fig. 1 as well as in Fig. 2, the horizontal direction represents the time axis including a plurality of subsequent time points tp where the time advances from left to right. Horizontal positions of respective boxes in the lower part and the upper part of Fig. 1 and Fig. 2 indicate a corresponding time point where the current time point is indicated as t in Fig. 1 and Fig. 2. In other words, past time points before the current time point t are located left to the boxes at the time point t and time points later than the current time point t are indicated by the boxes right to the time point t.

Several variables sv, sv', cv and tv are used for training the surrogate model SM in Fig. 1. Corresponding values of these variables at respective time points are indicated by the above-mentioned boxes and are pre-known during training to form the training data. Preferably, those values are taken from a past operation of the building management system BMS. However, those values may also be provided by an adequate simulation. According to Fig. 1, the training data comprise an input data set IS' which includes the input data set IS used by the policy model PO of Fig. 2 as well as by the trained controller of Fig. 3.

The input data set IS' comprises state variables sv which are corresponding observations and particularly sensor data provided by the building management system BMS. For the state variables sv, only values for the past up to the current time point t exist. In the embodiment described herein, the state variables sv include the ambient temperature around the building B. The input data IS' further comprise the state variables sv' which may also be based on observations and particularly sensor data for time points in the past up to the current time point. Contrary to the state variables sv, the state variables sv' also comprise corresponding values for future time points after the current time point t. For those future time points, the corresponding values may be predicted by specialized models or simulations or provided otherwise.

In the embodiment described herein, the state variables sv' comprise the solar radiation from outside the building for the room controlled by the controller CO where future values for the solar radiation are appropriately forecasted. Furthermore, the state variables sv' comprise the occupancy of the room (i.e. the number of persons within the room) for the past and the future, where the future occupancy may be provided by a corresponding known occupancy plan for the building B. In an alternative embodiment, the solar radiation and the occupancy may also form variables sv without including future values. Analogously, the above ambient temperature around the building may also be a variable sv' having future (forecasted) values.

The control variables cv are the variables which shall be predicted by the trained controller CO. The training data of the model SM includes values of the control variables cv for the current time point t as well as past time points and future time points. The values of the control variables cv for the current time point and the future time points are the only values of the input data IS' which are not included in the input data IS of the policy model PO and the controller CO.

In the embodiment described herein, the control variables cv comprise a cooling setpoint and a heating setpoint which are set by the trained controller CO for the controlled room. The cooling setpoint indicates the maximum room temperature allowed for the room, i.e. the room temperature above which the cooling of the room by air conditioning shall begin. The heating setpoint indicates the minimum temperature allowed for the room, i.e. the temperature below which the heating of the room shall begin.

The target variables tv of the input data set IS' comprise values for the current time point t and past time points. The target variables are state variables of the building B which shall be optimized by the controller. In the embodiment described herein, the target variables refer to the room temperature of the room controlled by the controller as well as the cooling power and the heating power used for the room controlled by the controller.

The surrogate model SM trained by the training according to Fig. 1 is a neural network. Instead of a neural network, any other data driven model based on machine learning with known training data may be used. The neural network comprises a well-known layer NOR for normalizing the input data set IS' as well as a well-known layer DEN for denormalizing the data output by the neural network. The neural network in the model SM is based on layers L1, L2 and L3, where the layers L1 and L2 comprise LSTM cells LC which are indicated by respective boxes where only some of the boxes are designated by the reference sign LC for the sake of clarity. The structure of the corresponding LSTM cells is well-known for a skilled person and will thus not be described in detail herein. Each LSTM cell in the layer L1 is associated with a respective time point and processes variables of the input data set IS' at the respective time point. Furthermore, each LSTM cell in the layer L2 receives the output of one LSTM cell in the layer L1.

The layer L3 includes multi layer perceptrons MLP, where each perceptron comprises several layers which can be regarded as sub-layers of the layer L3. The multi layer perceptrons MLP are indicated as corresponding boxes within the layer L3, where only some of the boxes are designated by the reference numeral MLP for the sake of clarity. The structure of multi layer perceptrons is well-known for a skilled person and, thus, will not be described in detail herein. Each multi layer perceptron is associated with one LSTM cell within the layer L2 and receives the output of the associated LSTM cell. The outputs of the multi layer perceptrons MLP are input to the above mentioned denormalization layer DEN which in turn outputs predicted data PD indicated as two lines above the surrogate model SM in Fig. 1. The predicted data PD comprise future values of the target variables tv as well as future values of the state variables sv. The future values of the target variables tv output by the (trained) surrogate model SM will be used for the reward of the policy model PO which will be described with respect to Fig. 2.

The surrogate model SM is trained by an appropriate training method with training data comprising for various time points pre-known input data sets IS' as well as pre-known output data sets in the form of the predicted data PD. Those training data are taken from pre-known input data sets IS and pre-known output data sets OS shown in Fig. 2. A corresponding cost function CF is used during training, where the value of the cost function raises in case the difference between the predicted values of the surrogate model SM and the corresponding values of the training data raises.

In a preferred embodiment, the surrogate model SM is a probabilistic model where the predicted data PD are accompanied by an uncertainty value. Particularly, the predicted data may be represented by the mean value of a Gaussian distribution accompanied by its uncertainty in the form of its standard deviation. In case that the surrogate model SM is a probabilistic model, a negative log-likelihood loss term (well-known) is included in the cost function CF and the policy model PO incorporates the uncertainties as one or more corresponding penalization terms in its reward.

After having completed the training of the surrogate model SM according to Fig. 1, the trained surrogate model SM will be included in the training of the policy model PO as shown in Fig. 2. The trained policy model PO provides future values of the control variables cv. The trained policy model is implemented in the controller CO. The policy model PO receives as an input data set IS values of the above described state variables sv, sv', cv and tv. The input data set IS comprises values of the variables sv, sv' and tv for the current time point and several past time points, values of the control variables cv for past time points not including the current time point as well as values of the state variables sv' for future time points. The input data set IS is also the input data set IS used by the trained controller CO described with respect to Fig. 3.

The input data set IS is fed to the policy model PO which is a neural network in the embodiment described herein. Instead of a neural network, any other data driven model based on machine learning with known training data may be used. The neural network comprises a well-known normalization layer NOR and a well-known denormalization DEN. Between those layers, the neural network comprises a well-known multi layer perceptron MLP which will not be described in detail herein. The multi layer perceptron receives the normalized input data set IS and produces a denormalized output data set OS in the form of predicted values of the control variables cv for the current time point as well as several future time points.

For training the policy model PO, offline reinforcement learning based on a reward RW is used where the reward is used as a cost function to be maximized during training. Reinforcement learning and neural network training are well-known methods and, thus, will not be described in detail herein. Reinforcement learning uses an adequately defined reward and tries to maximize the reward during learning. The training data used during learning are pre-known input data sets IS in combination with pre-known output data sets OS.

In the training of Fig. 2, the reward RW depends on future values of the target variables tv. In order to obtain those future values, the trained surrogate model SM is used. This surrogate model SM receives the input data set IS as well as the policy predicted output data set OS and outputs the predicted data PD. The predicted data comprise future values after the current time point for the target variables tv and the state variables sv. The future values of the target variables tv will be used for calculating the reward RW. The reward RW may also include at least some of the values of the input data set IS.

In the embodiment described herein, the reward RW includes for a corresponding future time point within the prediction data PD a sum of terms comprising the negative value of the cooling power and the negative value of the heating power. Furthermore, the terms comprise the minimum of the value 0 and the difference between the cooling setpoint and the room temperature as well as the minimum of the value 0 and the difference between the room temperature and the heating setpoint. In other words, the reward provides a balance between comfort (i.e. the room temperature shall lie between the heating setpoint and the cooling setpoint) and low energy consumption (low heating and cooling power).

After having completed the training of Fig. 2, the trained policy model PO is implemented in the controller CO. Thereafter, the controller CO is used for the building management system BMS of a building B as shown in Fig. 3. In a preferred embodiment, the controller CO itself has the capability for performing its configuration based on the training as described with respect to Fig. 1 and Fig. 2, i.e. the controller itself can generate the trained policy PO Such a controller can be re-trained when new data are available during the control performed by the controller.

Fig. 3 shows a building B comprising the building management system BMS. The building management system BMS collects a live input data set IS corresponding to the input data IS of Fig. 2 for a corresponding room to be controlled by the controller CO. The policy model PO implemented in the controller receives the input data set IS and calculates a corresponding output data set OS comprising future values of the control variables to be set by the controller at the current time point and the future time points included in the output data set OS. The output data set OS is dumped into a database DB and the corresponding values of the control variables are read out from the database at the respective time points in order to adjust the control variables to the value at the relevant time point. In the embodiment described herein, the corresponding cooling and heating setpoints are adjusted by the controller CO. Due to the learning of the policy model PO based on a reward with an adequate strategy, an optimized control for the building management system BMS can be achieved.

The invention as described in the foregoing has several advantages. Particularly, a surrogate model and a policy model for a building management system can be developed directly from operational data (i.e. training data) without any additional information. Thereby, time and costs for the setup of a corresponding controller can be significantly reduced for a new building. Over time, the predictive performance of the models can be improved by additional learning about special situations. Moreover, the forecasting performance is better than for simple MPC models and with respect to using approximate assumptions on building properties for simulations. Depending on the weighting of the optimization goals within the reward, the control energy can result in a lower energy consumption and lower CO₂ emissions and/or a higher comfort for building users.

## Claims

1. A computer-implemented method for configuring a controller (CO) for a technical system, where the controller (CO) controls the technical system based on an output data set (OS) determined by the controller (CO) for an input data set (IS), where the output data set (OS) comprises respective future values of one or more control variables (cv) for one or more subsequent time points (tp) not before a current time point (t), where the input data set (IS) comprises respective past values of one or more state variables (sv, sv') for one or more subsequent time points (tp) not after the current time point (t) and respective past values of one or more target variables (tv) for one or more subsequent time points (tp) not after the current time point (t) and respective past values of said one or more control variables (cv) for one or more subsequent time points (tp) before the current time point (t), wherein the method comprises the following steps:
- training a first data driven model (SM) with training data comprising several pre-known input data sets (IS) and corresponding pre-known output data sets (OS) for the respective pre-known input data sets (IS), where the first data driven model (SM) predicts respective future values of said one or more target variables (tv) for one or more subsequent time points (tp) after the current time point (t) ;
- training a second data driven model (PO) with said training data using reinforcement learning with a reward (RW) depending on the respective future values of said one or more target variables (tv) which are predicted by the trained first data driven model (SM), where the trained second data driven model (PO) is configured to determine the output data set (OS) for the input data set (IS) within the controller (CO).

2. The method according to claim 1, wherein the input data set (IS) further includes respective future values of at least one predetermined state variable (sv') out of said one or more state variables (sv, sv') for one or more subsequent time points (tp) after the current time point (t).

3. The method according to claim 1 or 2, wherein the input data set (IS) includes one or more variables, each variable indicating a corresponding goal of optimization in the reward (RW).

4. The method according to one of the preceding claims, wherein the technical system is a building management system (BMS) for a building (B).

5. The method according to claim 4, wherein the one or more state variables (sv, sv') comprise at least one of the following variables:
- the occupancy of at least one room in the building (B);
- the solar radiation from outside the building (B);
- one or more ambient variables around the building (B), particularly the ambient temperature around the building (B) .

6. The method according to claim 4 or 5, wherein the one or more target variables (tv) comprise at least one of the following variables:
- one or more variables within at least one room in the building (B), particularly the room temperature;
- the cooling power for cooling at least one room in the building (B);
- the heating power for heating at least one room in the building (B).

7. The method according to one of claims 4 to 6, wherein the one or more control variables (cv) comprise at least one of the following variables:
- a cooling setpoint indicating the maximum room temperature allowed for at least one room in the building (B);
- a heating setpoint indicating the minimum temperature allowed for at least one room in the building (B).

8. The method according to claims 6 and 7, wherein the reward (RW) is defined such that the reward (RW) is higher for predicted values of the room temperature lying between a predicted future value of the heating setpoint and a predicted future value of the cooling setpoint than for other values of room temperatures and that the reward raises with a decreasing predicted value of the cooling power and a decreasing predicted value of the heating power.

9. The method according to one of the preceding claims, wherein the first data driven model (SM) is a probabilistic model providing predicted future values of said one or more target variables (tv) together with an uncertainty and the second data driven model (PO) incorporates said one or more uncertainties as one or more corresponding penalization terms in the reward (RW).

10. The method according to one of the preceding claims, wherein the first data driven model (SM) is a neural network which preferably comprises one or more layers of LSTM cells (LC) and/or one or more layers with several multi layer perceptrons.

11. The method according to one of the preceding claims, wherein the second data driven model (PO) is a neural network which preferably comprises a multi layer perceptron.

12. A controller for a technical system, wherein the controller (CO) is adapted to carry out a method according to one of the preceding claims.

13. A computer program product with program code stored on a machine-readable carrier for carrying out a method according to one of claims 1 to 11 when the program code is executed on a computer.

14. A computer program with program code for carrying out a method according to one of claims 1 to 11 when the program code is executed on a computer.
